# EUROPEAN PATENT SPECIFICATION

(11) **EP 2 503 292 B1**
(45) Date of publication and mention of the grant of the patent: **06.01.2016**
(21) Application number: 11002356.1
(22) Date of filing: 22.03.2011
(51) Int. Cl.: G01C 21/36

(54) **Landmark icons in digital maps**
Orientierungshilfesymbole in digitalen Karten
Icônes de repère sur cartes numériques

(43) Date of publication of application: 26.09.2012
(73) Proprietor: Harman Becker Automotive Systems GmbH, 76307 Karlsbad (DE)
(72) Inventor: Spindler, CC, 76135 Karlsruhe (DE); Ivanov, Vladimir, 81375 München (DE); Fischer, Martin, 80805 München (DE); Schütz, Simon, 70195 Stuttgart (DE)
(74) Representative: Grünecker Patent- und Rechtsanwälte PartG mbB

(56) References cited:
- EP-A1- 1 746 391
- EP-A2- 1 024 467
- EP-A2- 1 189 176
- DE-A1-102006 059 922
- US-A1- 2006 152 503
- US-B1- 6 710 774

## Description

### Field of Invention

The present invention relates to digital maps representing towns and landscapes that are used for route guidance by a navigation system and, in particular, it relates to the managing and representation of landmarks in digital maps, for example, digital city maps and digital road maps.

### Prior Art

The use of navigation systems, in particular, in vehicles as automobiles becomes increasingly prevalent. Usually on board navigation computer systems analyze the combined data provided by GPS (Global Positioning System), motion sensors as ABS wheel sensors as well as a digital map and thereby determine the actual position and velocity of a vehicle with increasing preciseness.

Known navigation systems typically make use electronic digital maps to represent cartographic features, as streets, buildings and rivers, and make use of a medium such as a compact disk or a digital video disc to store the data that relates to the cartographic features. After map matching the actual position of the user is indicated in the digital map. By acoustic and/or visualized information the user is guided to the predetermined destination.

Some navigation systems are able to display detailed digital maps indicating routes to destinations, the types of manoeuvres to be taken at various locations as junctions as well as different kinds of points of interest as, for example, gas stations or restaurants and also landmarks. As the vehicle changes position, either the vehicle position mark on the displayed image changes, or the digital map is scrolled, while the vehicle position mark is fixed at a predetermined position.

More elaborated navigation systems provide enlarged views, for example, of junctions on the guide route, where the driver should turn, in order to help the driver to identify the route to be taken to the predetermined destination more accurately. The displayed images represent simplified synthesized views from the driver's perspective. However, a 2-dimensional representation can confuse the driver, in particular, if roads are intersecting a different height levels or in rotary turns with roads in close proximity. Herein, the terms 'road' and 'street' are used in an interchangeable manner.

Recently, various navigation systems have been developed that have provided algorithms for transforming data from a geographic database into a 3-dimensional perspective view which, in principle, is much more easily understood by many drivers. Elaborated systems allow for displaying the intersection approached by the vehicle at variable angles relative to the road depending on the complexity of the intersection. Herein, the terms 'intersection' and 'junction' are used in an interchangeable way.

In order to provide the navigation functions the navigation systems make use of one or more detailed databases that comprise data which represent physical features of a geographic region. The employed navigation database may comprise a main image file comprising bitmap images consisting, e.g., of bitmap of the road geometry signposts, landmarks, the skyline etc. The database may comprise a main image file comprising bitmap images and/or vector graphics consisting, e.g., of bitmap of the road geometry, signposts, landmarks, the skyline etc. Landmarks, for example, heritage sites, prominent buildings or historical and natural monuments, advantageously provide the user of a navigation system with quickly recognizable information on the actual topology and allow for quick reliable spatial orientation, in particular, useful for a driver of an automobile that is equipped with a navigation system.

Document DE 10 2006 059 922 A1 discloses a method for representing a portion of a map in a navigation system, wherein physical objects are depicted either three-dimensionally or two-dimensionally, depending on the distance from a view point. Similar visualisation systems are known from EP 1024467 A2 and US 2006/0152503 A1.

However, a main difficulty in elaborated navigation systems relates to the efficient utilization of the available computer resources as storage capacity and the memory and performance of a computer central processor unit (CPU) in the embedded systems. If, for example, it takes the navigation system more than a few seconds to calculate the recommended route and/or to display the forward path and surrounding area properly, the driver may have moved beyond a point at which information provided by the navigation system is relevant as is, in particular, the case at junctions. Particularly, the appropriate and detailed display of landmarks proves a challenging demand for the computational resources of navigation systems. Therefore, there is a need to improve the management and display of landmarks in digital maps used for route guidance.

### Description of the Invention

The present invention addresses the above-mentioned need and provides a method according to claim 1.

The method may also comprise storing a three-dimensional graphical object representing the physical object in a database and storing a two-dimensional graphical object representing the physical object in a database (either the same or another one as the database wherein the three-dimensional graphical object is stored).

In particular, the method can comprise determining the location of the navigation system and displaying the least a part of the digital map representing a surrounding area of the determined location and either displaying the three-dimensional graphical object or the two-dimensional graphical object depending on a location of the physical object with respect to the determined location of the navigation system. The physical object may be a landmark, for example, a heritage site, prominent building, like a cathedral, or a historical and natural monument. Since landmarks, in particular, towns' landmarks exhibit a high memo value they are of particular importance when helping the driver of an automobile, for example, to orientate himself when faced with a complex road topology. Graphical representations of landmarks, on the other hand, are expensive in terms of computational resources and, thus, it is particularly advantageous to graphically represent landmarks by only two-dimensional graphical objects (herein the term "icon" will interchangeably be used for the term "two-dimensional graphical object") when they are only hardly or not at all visible by the driver in the actual physical environment.

In fact, according to the inventive method it is made a decision whether a physical object, for example, a landmark, will be represented in the digital map (displayed in the map) by an icon or a three-dimensional object. The digital map may be a two-dimensional map or a three-dimensional one. The decision is, in principal, made on the basis of the location of the physical object. Usually, digital maps displayed for route guidance are centered on a location of the navigation system in the digital map, for example, the location of an automobile equipped with the navigation system. If an actual physical object for which both a three-dimensional graphical object and an icon representation are available in a database of the navigation system, it might be determined whether the physical object is within a predetermined distance from the location of the navigation system. In this case, the at least a part of the displayed digital map represents a surrounding area of the determined location and if it is determined that the physical object lies within the determined distance, the three-dimensional graphical object will be displayed in the digital map to represent the physical object. If, on the other hand, the physical object is not within the determined distance, the icon will be displayed in the digital map to represent the physical object. The at least a part of the displayed digital map that represents a surrounding area of the determined location may comprise a junction view, in particular, a three-dimensional junction view, for example, a three-dimensional junction view from the perspective of a driver using a navigation system wherein the inventive method is implanted. Similarly, according to an embodiment of the inventive method the two-dimensional graphical object is displayed, if the distance of the graphical representation of the physical object from a center of the displayed at least a part of the digital map exceeds a predetermined threshold. If the distance of the graphical representation of the physical object from a center of the displayed at least a part of the digital map does not exceed the predetermined threshold, the three-dimensional graphical object will be displayed in the digital map.

Besides the mere distance, the location of the physical object to be represented in the digital map with respect to the location of other physical objects in the surrounding of the same is taken into account. It is determined whether or not another physical object lies within a direction or angle of view from the location of the navigation system such that this other physical object partly, mostly or completely hides the physical object to be represented in the digital map. If there is some hiding above a predetermined level, it might be preferred to display the icon rather than the three-dimensional graphical object representing the physical object.

The determination whether or whether not another physical object lies within a direction or angle of view from the location of the navigation system such that the physical object that is to be represented in the digital map is hidden can be made on the basis of information provided by three-dimensional map data comprising, for example, information on the heights of buildings or hills. In fact, the digital map used in the inventive method can be a three-dimensional map, in particular, a three-dimensional digital generated based on a digital terrain model. A terrain model is a three-dimensional model, e.g., a digital model of a landscape obtained by laser-scanning, for instance. A great variety of topographic terrain models is provided by official institutions as well as commercial providers. In principle, a digital terrain model is a digital file consisting of terrain elevations for ground positions at regularly or irregularly spaced horizontal intervals. The term "terrain" as used herein shall also comprise the three-dimensional topography of an urban area, a city, a village etc. The raster points included in the terrain model have three-dimensional coordinate values.

In all of the above-described variants of the herein disclosed method for graphically representing a physical object in a digital map computational resources as memory resources can be saved and computational time can be reduced compared to the art, since a physical object of interest is merely represented by an icon when a full three-dimensional representation of the same in the digital map is only of limited use (for example, for a driver of an automobile equipped wit a navigation system). Thus, the display of the actual digital map including a representation of a physical object, for example, a landmark, can be significantly accelerated.

According to alternative embodiments the icon and/or the three-dimensional graphical object comprises or consists of a vector graphic object or a bitmap object. Whereas bitmapped images consist of rows and columns of dots, vector graphics are represented as mathematical formulas that define all the shapes in an image. Vector graphics, being based on mathematical functions, are scalable, not restricted to rectangular shapes and transparent. Moreover, vector graphics require less disk space than bitmaps, since they can be calculated from relatively few data points that have to be stored.

It is further provided a method for route guidance implemented in a navigation system, in particular, vehicle navigation system, with a display device comprising the steps of the method according to one of the above-described examples and further comprising providing guidance information to a user of the navigation system. The route guidance can be performed acoustically and/or optically. The user of the (vehicle) navigation system is provided with a display of a digital map by a display means of the navigation system. According to one of the above-described examples, a landmark is represented in the digital either by a three-dimensional graphical object or an icon depending on the location of the landmark.

Herein, it is also provided a computer program product, comprising one or more computer readable media having computer-executable instructions for performing the steps of the method according to one of the above-described examples of the inventive method for graphically representing a physical object in a digital map that can be used by a navigation system.

The above-mentioned need is also addressed by providing
a navigation database comprising
digital map data;
three-dimensional graphical objects representing corresponding physical objects;
two-dimensional graphical objects representing the corresponding physical objects;
data comprising references between a location in a digital map given by the digital map data and a three-dimensional graphical object as well as a two-dimensional graphical object and/or references between a three-dimensional graphical object representing a physical object and a two-dimensional graphical object representing the physical object. It is to be understood that the references are (data) links between the particular data. The location in the digital map can be given by coordinate values. In that navigation database the physical objects may particularly be landmarks. By the expression that the navigation database comprises two-(three-)dimensional graphical objects it is meant that it stores data for these graphical objects.

Furthermore, it is provided a navigation system, in particular, a vehicle navigation system, comprising
the above-mentioned navigation database;
a location means configured to determine an actual position of the navigation system;
a display means configured to display a digital map based on data of the navigation database; and
a controller configured to cause the display means to display either a three-dimensional graphical object representing a physical object or a two-dimensional graphical object representing the physical object at a particular location in the digital map. The decision whether the three-dimensional graphical object or the two-dimensional graphical object is displayed depends on the location of the physical object. Route guidance can be performed by the navigation system while displaying the digital map including one or more icons or three-dimensional graphical objects.

The controller may be configured to cause the display means to display the two-dimensional graphical object, if the distance of the physical object from the determined location of the navigation system exceeds a predetermined threshold.

Moreover, the controller is configured to cause the display means to display the two-dimensional graphical object, if in the digital map the distance of the graphical representation of the physical object from a center of the displayed at least a part of the digital map exceeds a predetermined threshold. The distance may be determined by coordinate values provided for the digital map.

Further, the controller is configured to determine whether the physical object to be represented in the digital map is (partly) hidden by another physical object. In this case, the controller is configured to cause the display means to display a two-dimensional graphical object representing the physical object, if it is determined that the physical object to be represented in the digital map is (partly) hidden by another physical object.

Additional features and advantages of the present invention will be described with reference to the drawings. In the description, reference is made to the accompanying figures that are meant to illustrate preferred embodiments of the invention. It is understood that such embodiments do not represent the full scope of the invention.

Figure 1 illustrates a three-dimensional graphical object and icon, respectively, representing a landmark.

Figure 2 shows a flow diagram of the method according to an example of the present invention.

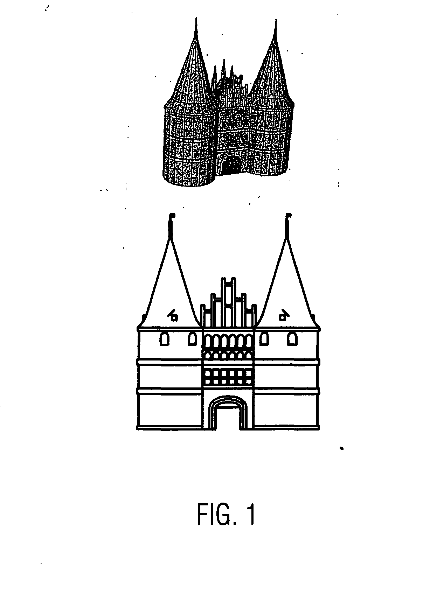

Figure 1 representatively illustrates a vector graphic (upper row), for example, obtained from a digital picture of a landmark recorded with a video camera. Based on the recorded images of buildings, or the like, 3-dimensional models can be synthesized as vector graphics. Preferably, such synthesized models have data formats and algorithms that are adapted to the limited computer resources of vehicle navigation systems. Since vector graphics are based on mathematical functions, they can be calculated from relatively few data points that have to be stored. Data of each vector graphic has to be stored in a vector database only once. However, even if vector graphics rather than conventional bitmaps are used, still the demand for computational resources is relatively high. Thus, if the resulting loss of information is considered acceptable two-dimensional graphical objects (icons) rather than three-dimensional graphical objects are displayed in a digital map according to the present invention. An example for an icon corresponding to the vector graphic is shown in the lower row of Figure 1.

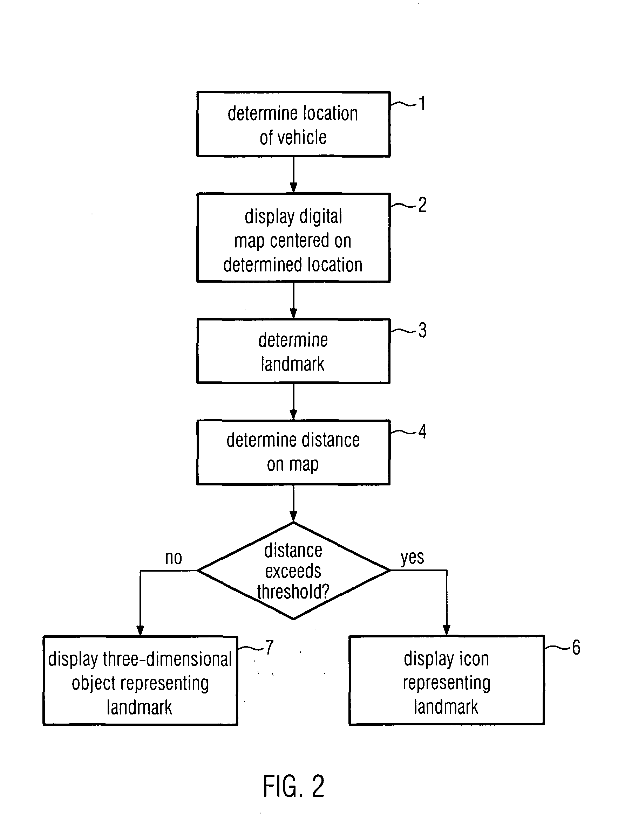

An example of the method of present invention is described with reference to Figure 2. According to this example, the method is implemented in a vehicle navigation system. Consider a case wherein a vehicle is on its route recommended by the navigation system. The navigation system continuously determines the position of the vehicle, by taking into account data received by a GPS receiver and motion sensors. Map matching allows for a precise location 1 of the vehicle in the digital map provided by a map database. A digital map and the position in the map are displayed to the driver. The digital map is displayed 2 centered on the determined location of the vehicle. Based on the information about the actual position of the vehicle and the driving direction according to the recommended route the geographical section in view of the driver can be calculated. By means of the map matching and the map database, it can be determined whether a landmark comes into view in the forward path of the vehicle according to the predetermined route. If no landmark is detected, nothing special happens. The navigation system continues determining the actual position of the vehicle and displaying a digital map centered on the actually determined location of the vehicle.

If a landmark is detected 3 and some reference in the map (navigation) database of the navigation system indicates that a graphical object digitally representing the landmark is available, the distance on the map (from the center of the same) is determined 4. Next, it is determined 5 whether the distance exceeds a predetermined threshold. In an urban area the threshold may be chosen to be some 100 meters, in a rural area the threshold may be some kilometers, for example.

If the threshold is exceeded it is not necessary to provide a user of the navigation system with full three-dimensional information of the landmark but rather a two-dimensional icon is displayed 6 in the digital map at the appropriate site. If, on the other hand, the threshold is not exceeded, it is considered worthwhile providing the user with the full three-dimensional information of the landmark and, accordingly, a three-dimensional graphical object is loaded from a database and displayed 7 in the digital map at the appropriate site. Thus, the computational load can be controlled in accordance with the location of the physical object that is to be represented in the digital map.

## Claims

1. A method for graphically representing a landmark in a digital map comprising displaying at least a part of the digital map;
determining a distance between a center of the displayed at least a part of the digital map and a location of the landmark on the displayed at least a part of the digital map; and
either displaying a three-dimensional graphical object representing the landmark or a two-dimensional graphical object representing the landmark depending on the location of the landmark;
wherein the two-dimensional graphical object is displayed, if the determined distance exceeds a predetermined threshold; and
**characterised by**
determining whether the landmark is hidden or partly hidden by another physical object and displaying the two-dimensional graphical object representing the landmark, if it is determined that the landmark is hidden or partly hidden by another physical object.

2. The method according to claim 1, wherein the two-dimensional graphical object and/or the three-dimensional graphical object comprises or consists of a vector graphic object or a bitmap object.

3. The method according to one of the preceding claims, wherein the digital map is a three-dimensional map.

4. A method for route guidance implemented in a navigation system, in particular, vehicle navigation system, with a display device comprising the steps of the method according to one of the preceding claims and further comprising providing guidance information to a user of the navigation system.

5. Computer program product, comprising one or more computer readable media having computer-executable instructions for performing the steps of the method according to one of the preceding claims.

6. A navigation system, in particular, a vehicle navigation system, comprising
a navigation database comprising digital map data, three-dimensional graphical objects representing corresponding landmarks and two-dimensional graphical objects representing the corresponding landmarks the data comprising references between a location in a digital map given by the digital map data and a three-dimensional graphical object as well as a two-dimensional graphical object and/or references between a three-dimensional graphical object representing a landmark and a two-dimensional graphical object representing the landmark;
a location means configured to determine an actual position of the navigation system;
a display means configured to display a digital map based on data of the navigation database;
a controller configured to cause depending on a location of a landmark the display means to either display at a particular location in the digital map a three-dimensional graphical object representing the landmark or to display a two-dimensional graphical object representing the landmark, determine a distance between a center of the displayed at least a part of the digital map and the location of the landmark on the displayed at least a part of the digital map, and displaying the two-dimensional graphical object if the determined distance exceeds a predetermined threshold;
**characterised in that**
the controller is further configured to determine whether the landmark is hidden or partly hidden by another physical object and to cause the display means to display the two-dimensional graphical object representing the landmark, if it is determined that the landmark is hidden or partly hidden by another physical object.

7. The navigation system according to claim 6, wherein the digital map data provide a three-dimensional digital map.

## Patentansprüche

1. Verfahren zum grafischen Darstellen eines Orientierungspunkts in einer digitalen Karte, die wenigstens einen Teil der digitalen Karte anzeigt, umfassend;
Bestimmen eines Abstands zwischen einer Mitte des angezeigten wenigstens einen Teils der digitalen Karte und einer Position des Orientierungspunkts auf dem angezeigten wenigstens einen Teil der digitalen Karte; und
entweder Anzeigen eines dreidimensionalen grafischen Objekts, das den Orientierungspunkt darstellt, oder eines zweidimensionalen grafischen Objekts, das den Orientierungspunkt darstellt, abhängig von der Position des Orientierungspunkts;
wobei das zweidimensionale grafische Objekt angezeigt wird, wenn der bestimmte Abstand einen vorgegebenen Schwellenwert übersteigt; und
**gekennzeichnet durch**
Bestimmen, ob der Orientierungspunkt **durch** ein anderes physisches Objekt verdeckt oder teilweise verdeckt wird, und Anzeigen des zweidimensionalen grafischen Objekts, das den Orientierungspunkt darstellt, wenn bestimmt wird, dass der Orientierungspunkt **durch** ein anderes physisches Objekt verdeckt oder teilweise verdeckt wird.

2. Verfahren nach Anspruch 1, wobei das zweidimensionale grafische Objekt und/oder das dreidimensionale grafische Objekt ein Vektorgrafikobjekt oder ein Bitmap-Objekt umfasst oder daraus besteht.

3. Verfahren nach einem der vorangehenden Ansprüche, wobei die digitale Karte eine dreidimensionale Karte ist.

4. Verfahren zur Routenführung, das in einem Navigationssystem implementiert wird, insbesondere einem Fahrzeugnavigationssystem, mit einer Anzeigevorrichtung, umfassend die Schritte des Verfahrens nach einem der vorangehenden Ansprüche, und ferner umfassend Bereitstellen von Führungsinformationen an einen Benutzer des Navigationssystems.

5. Computerprogrammprodukt, umfassend ein oder mehrere computerlesbare Medien mit durch Computer ausführbaren Anweisungen zum Durchführen der Schritte des Verfahrens nach einem der vorangehenden Ansprüche.

6. Navigationssystem, insbesondere ein Fahrzeugnavigationssystem, umfassend:
eine Navigationsdatenbank, umfassend digitale Kartendaten, dreidimensionale grafische Objekte, die entsprechende Orientierungspunkten darstellen, und zweidimensionale grafische Objekte, die die entsprechenden Orientierungspunkt darstellen, wobei die Daten Verweise zwischen einer Position in einer digitalen Karte, die durch die digitalen Kartendaten gegeben wird, und einem dreidimensionalen grafischen Objekt sowie einem zweidimensionalen grafischen Objekt und/oder Verweise zwischen einem dreidimensionalen grafischen Objekt, das einen Orientierungspunkt darstellt, und einem zweidimensionalen grafischen Objekt, das den Orientierungspunkt darstellt, umfassen;
ein Positionsmittel, das dazu konfiguriert ist, eine tatsächliche Position des Navigationssystems zu bestimmen;
ein Anzeigemittel, das dazu konfiguriert ist, eine digitale Karte anhand von Daten der Navigationsdatenbank anzuzeigen;
eine Steuereinrichtung, die dazu konfiguriert ist, abhängig von einer Position des Orientierungspunkts das Anzeigemittel entweder dazu zu veranlassen, an einer bestimmter Position in der digitalen Karte ein dreidimensionales grafisches Objekt anzuzeigen, das den Orientierungspunkt darstellt, oder ein zweidimensionales grafisches Objekt anzuzeigen, das den Orientierungspunkt darstellt, einen Abstand zwischen einer Mitte des angezeigten wenigstens einen Teils der digitalen Karte und der Position des Orientierungspunkts auf dem wenigstens einen Teil der digitalen Karte zu bestimmen und das zweidimensionale grafische Objekt anzuzeigen, wenn der bestimmte Abstand einen vorgegebenen Schwellenwert übersteigt;
**dadurch gekennzeichnet, dass**
die Steuereinrichtung ferner dazu konfiguriert ist, zu bestimmen, ob der Orientierungspunkt durch ein anderes physisches Objekt verdeckt oder teilweise verdeckt wird, und das Anzeigemittel zu veranlassen, das zweidimensionale grafische Objekt, das den Orientierungspunkt darstellt, anzuzeigen, wenn bestimmt wird, dass der Orientierungspunkt durch ein anderes physisches Objekt verdeckt oder teilweise verdeckt wird.

7. Navigationssystem nach Anspruch 6, wobei die digitalen Kartendaten eine dreidimensionale digitale Karte bereitstellen.

## Revendications

1. Méthode pour représenter de manière graphique un point de repère dans une carte numérique comprenant l'affichage d'au moins une partie de la carte numérique ; la détermination d'une distance entre un centre d'au moins une partie affichée de la carte numérique et un emplacement du point de repère sur au moins une partie affichée de la carte numérique ; et
soit l'affichage d'un objet graphique en trois dimensions représentant le point de repère ou un objet graphique en deux dimensions représentant le point de repère en fonction de l'emplacement du point de repère ;
dans laquelle l'objet graphique en deux dimensions est affiché, si la distance déterminée dépasse un seuil prédéterminé ; et
**caractérisée par**
la détermination si le point de repère est masqué ou partiellement masqué par un autre objet physique et l'affichage de l'objet graphique en deux dimensions représentant le point de repère, s'il est déterminé que le point de repère est masqué ou partiellement masqué par un autre objet physique.

2. Méthode selon la revendication 1, dans laquelle l'objet graphique en deux dimensions et/ou l'objet graphique en trois dimensions comprend ou consiste en un objet graphique à vecteur ou un objet bitmap.

3. Méthode selon l'une quelconque des revendications précédentes, dans laquelle la carte numérique est une carte en trois dimensions.

4. Méthode de guidage routier implémenté dans un système de navigation, en particulier, un système de navigation de véhicule, avec un appareil d'affichage comprenant les étapes de la méthode selon l'une quelconque des revendications précédentes et comprenant en outre la fourniture d'informations de guidage à un utilisateur du système de navigation.

5. Produit de programme d'ordinateur, comprenant un ou plusieurs supports lisibles par un ordinateur ayant des instructions exécutables par un ordinateur pour effectuer les étapes de la méthode selon l'une quelconque des revendications précédentes.

6. Système de navigation, en particulier, un système de navigation de véhicule, comprenant
une base de données de navigation comprenant des données de carte numérique, des objets graphiques en trois dimensions représentant des points de repère correspondants et des objets graphiques en deux dimensions représentant les points de repère correspondants, les données comprenant des références entre un emplacement dans une carte numérique données par les données de carte numérique et un objet graphique en trois dimensions ainsi qu'un objet graphique en deux dimensions et/ou des références entre un objet graphique en trois dimensions représentant un point de repère et un objet graphique en deux dimensions représentant le point de repère ;
un moyen d'emplacement configuré pour déterminer une position réelle du système de navigation ;
un moyen d'affichage configuré pour afficher une carte numérique basée sur les données de la base de données de navigation ;
un contrôleur configuré pour amener en fonction d'un emplacement d'un point de repère le moyen d'affichage à soit afficher à un emplacement particulier de la carte numérique un objet graphique en trois dimensions représentant le point de repère ou à afficher un objet graphique en deux dimensions représentant le point de repère, déterminer une distance entre un centre d'au moins une partie affichée de la carte numérique et l'emplacement du point de repère sur au moins une partie affichée de la carte numérique, et l'affichage de l'objet graphique en deux dimensions si la distance déterminée dépasse un seuil prédéterminé ;
**caractérisé en ce que**
le contrôleur est en outre configuré pour déterminer si le point de repère est masqué ou partiellement masqué par un autre objet physique et pour amener le moyen d'affichage à afficher l'objet graphique en deux dimensions représentant le point de repère, s'il est déterminé que le point de repère est masqué ou partiellement masqué par un autre objet physique.

7. Système de navigation selon la revendication 6, dans lequel les données de carte numérique fournissent une carte numérique en trois dimensions.
